# EUROPÄISCHE PATENTANMELDUNG

(11) **EP 1 071 196 A2**
(43) Veröffentlichungstag der Anmeldung: **24.01.2001**
(21) Anmeldenummer: 00111461.0
(22) Anmeldetag: 27.05.2000
(51) Int. Cl.: H02M 3/158

(54) **Elektrisch ansteuerbare Antriebseinrichtung**

(30) Priorität: 22.07.1999 DE 29912470 U
(71) Anmelder: KUHNKE GmbH, D-23714 Malente (DE)
(72) Erfinder: Gau, Bernhard, 72622 Nürtingen (DE); Schöning, Holger, Dipl.-Ing., 23714 Malente (DE)
(74) Vertreter: Wilcken, Thomas, Dipl.-Ing.

(57) **Zusammenfassung**

Die Antriebseinrichtung (1) ist mit wenigstens einem ersten und wenigstens einem zweiten elektrisch betreibbaren Aktor (A₁, A₂) ausgestattet. Die Aktoren können durch eine erste Steuerung (2) und durch Schaltmittel (S₁ - S₃) wahlweise in Reihe oder parallel an die Pole einer Versorgungsspannung (U) angelegt werden, wobei die Aktoren beim Einschalten der Versorgungsspannung als Ausgangsposition zur Abgabe einer Minimalleistung durch die Steuerung (2) in Reihe an die Versorgungsspannung geschaltet sind und zur Abgabe einer Maximalleistung mittels der ersten Steuerung (2) parallel an die Versorgungsspannung (U) geschaltet sind. Zur variablen Vorgabe von Leistungen zwischen der Minimal- und Maximalleistung wenigstens eines ersten Aktors (A₁) wird die Versorgungsspannung (U) diesem Aktor pulsbreitenmoduliert in zeitlich definierter Einschalt-Ausschalt-Taktfolge zugeführt.

## Beschreibung

Die Erfindung betrifft eine elektrisch ansteuerbare Antriebseinrichtung mit mindestens einem ersten und mindestens einem zweiten elektrisch betreibbaren Aktor, bei der die Aktoren durch eine erste Steuerung und durch Schaltmittel wahlweise in Reihe oder parallel an die Pole einer Versorgungsspannung anlegbar sind, wobei die Aktoren beim Einschalten der Versorgungsspannung als Ausgangsposition zur Abgabe einer Minimalleistung durch die Steuerung in Reihe an die Versorgungsspannung geschaltet sind und zur Abgabe einer Höchstleistung durch die Steuerung parallel an die Versorgungsspannung geschaltet sind.

Derartige Antriebseinrichtungen finden sich unter anderem in Geräten zur Förderung fluidischer Medien, wie z. B. Gase oder Flüssigkeiten, und ebenso auch in Geräten zur Förderung und Abfüllung von Granulaten und dergleichen.

Diese Antriebseinrichtungen bieten einerseits den Vorteil, dass bei einer Reihenschaltung der Aktoren diese nur eine entsprechend vorbestimmte Minimalleistung abgeben und somit im Falle einer solchen Aufgabenstellung einen reduzierten Energiebedarf erfordern. Andererseits besteht die Möglichkeit, durch den Einsatz einer geeigneten Steuerung, die Aktoren parallel zu schalten, wodurch die Höchstleistung zur Verfügung gestellt wird.

In der Praxis wird dieses beispielsweise in Abfülleinrichtungen genutzt, bei denen zunächst einmal eine vorbestimmte Menge eines Füllgutes in möglichst kurzer Zeit abgefüllt wird, während zur genauen Mengenbemessung die Minimalleistung gefahren wird.

Ein anderes Anwendungsbeispiel liegt im Bereich von Klima- bzw. Lüftungsanlagen. Durch entsprechende Vorgaben an die zugehörige Steuerung können hier im fluidischen Bereich die umzuwälzenden Luftmengen auf einen Minimalwert und einen Maximalwert eingestellt werden.

Nachteilig bei diesen bekannten Antriebseinrichtungen ist, dass hier letztlich nur zwei Leistungsstufen erreichbar sind, nämlich die bei Reihenschaltung der Aktoren minimale und die bei Parallelschaltung der Aktoren maximale Leistungsstufe.

Aufgabe der Erfindung ist es, eine Antriebseinrichtung mit zugehöriger Steuerung vorzuschlagen, die auch zwischen einer Minimal- und einer Maximalleistung frei wählbare Leistungsstufen bei möglichst großer Effizienz der Energie bietet.

Ausgehend von einer gattungsgemäßen Antriebseinrichtung der eingangs erwähnter Art wird diese Aufgabe wird so gelöst, dass zur variablen Vorgabe von Leistungen zwischen der Minimal- und der Maximalleistung des ersten Aktors die Versorgungsspannung dem ersten Aktor pulsbreitenmoduliert in zeitlich definierter Einschalt-Ausschalt-Taktfolge zuführbar ist. Entsprechend der jeweiligen Einschalt- bzw. Ausschalt-Pulsfolge, also der jeweiligen Einschalt- bzw. Ausschalt-Zeit, ergeben sich somit jeweils zugeordnete Leistungsabgaben entsprechend angesteuerter Aktoren.

Es ist hinlänglich bekannt, dass jede Induktivität, wie beispielsweise die Spule eines elektrisch ansteuerbaren Aktors, beim Abschalten eine Abschaltinduktion hervorruft, die als Spannung messbar ist. Die Höhe dieser Spannung kann ein Vielfaches der Versorgungsspannung sein. Diese Erkenntnis wird bei der erfindungsgemäßen Antriebseinrichtung genutzt, indem die Spannung aufgrund der Abschaltinduktion eines ersten Aktors einem zweiten Aktor durch die Steuerung aufgeschaltet wird. Hierdurch steht dem zweiten Aktor in diesem Augenblick eine erhöhte Spannung zur Verfügung.

Als besonders vorteilhaft hat sich in diesem Zusammenhang herausgestellt, wenn die Versorgungsspannung durch die Steuerung phasenverschoben derart getaktet wird, dass die Abschaltinduktion des ersten Aktors in der beginnenden Einschaltphase des zweiten Aktors den zweiten Aktor beaufschlagt und dessen Spannung anhebt und dass die Abschaltinduktion des zweiten Aktors in der beginnenden Einschaltphase des ersten Aktors diesen Aktor beaufschlagt und dessen Spannung anhebt.

Bei sicherheitsrelevanten Einsatzbedingungen der Antriebseinheit ist es vorteilhaft, der Steuerung eine Ausfallüberwachungssteuerung zuzuordnen, die der genannten Steuerung vorzugsweise hierarchisch als Master übergeordnet ist, wobei die Ausfallüberwachungssteuerung auf erkannte Ausfälle der ersten Steuerung und/oder wenigstens eines der Aktoren mit wenigstens einem diesbezüglichen Signal reagiert.

Als zweckmäßig hat sich herausgestellt, wenn sowohl die Steuerung als auch die Ausfallüberwachungssteuerung als eine gemeinsame Steuereinrichtung miteinander korrespondieren und in bevorzugter Ausführung eine gemeinsame Steuer-Baueinheit bilden, die z. B. über eine Signalstrecke mit einer wiederum übergeordneten Mastersteuerung korrespondiert. In einer weiteren Ausführung korrespondiert jede der Steuerungen, also die vorerwähnte erste Steuerung, die Ausfallüberwachungssteuerung bzw. die gemeinsame Steuereinrichtung, jeweils für sich selbständig auf der Signalstrecke mit der Mastersteuerung. Die Signalstrecke kann drahtgebundener Art sein, aber auch als Lichtwellenleiter, als Funk-, Infrarot-, Ultraschallstrecke und dergleichen ausgebildet sein.

Es ist zweckmäßig, sowohl die Steuereinrichtung der Antriebseinrichtung als auch die übergeordnete Mastersteuerung so zu konzipieren, dass auf der Signalstrecke ein bidirektionaler Signalfluss erfolgen kann. Hierbei können einerseits aus der Mastersteuerung Steuersignale in die Steuereinrichtung eingespeist werden, andererseits kann die Steuereinrichtung in der Lage sein, beispielsweise bei Fehlererkennung und Fehlerdiagnosemaßnahmen, diesbezügliche Signale z. B. auf der Signalstrecke der übergeordneten Mastersteuerung zu übermitteln.

Die Ausfallüberwachungssteuerung überwacht die Plausibilität von eingehenden Signalen und von Rückmeldesignalen und nimmt eine Selbstüberwachung, eine Überwachung der ersten Steuerung und der erfolgten Funktionen der Aktoren vor, um bei einer Fehlererkennung ein Signal innerhalb der Steuereinrichtung als Rückmeldesignal zu generieren.

Die Einrichtung kann mehr als zwei Aktoren aufweisen, die von einer gemeinsamen Steuereinrichtung angesteuert und überwacht werden. Die Energieversorgung der Einrichtung kann wahlweise erfolgen aus einer Signalstrecke, einem Bussystem oder durch separate Einspeisung einer Gleichspannung.

Bei entsprechender Ausgestaltung einer Steuereinrichtung wird man dieser gegebenenfalls eine sogenannte dezentrale Intelligenz implementieren. Das bedeutet, dass die Steuereinrichtung unter anderem mit einem elektronischen Speicherbaustein bestückt ist, in welchem entsprechende Unterprogramme als Algorithmen abgelegt werden können.

Eine solche Ausgestaltung ermöglicht beispielsweise eine Plausibilitätsprüfung der eingehenden Signale und auch der Rückmeldesignale. Weiterhin sind eine Selbstüberwachung sowohl der Ausfallüberwachungssteuerung als solcher als auch die der ersten Steuerung und auch eine Überwachung der ausgeführten Aktorfunktionen ebenfalls möglich. Bei Fehlererkennung lässt sich somit bereits innerhalb der Steuereinrichtung eine Kategorisierung eines Fehlers vornehmen, wobei die Steuereinrichtung entsprechend der Zuordnung der Fehlerkategorie gegebenenfalls auf eine interne Alternativ-Programmabarbeitung zurückgreift oder bei einem schwererwiegendem Fehler, der nicht in die interne Fehlerkategorie eingeschrieben ist, ein entsprechendes Rückmeldesignal an die Mastersteuerung sendet.

Bei einem Totalausfall der Steuereinrichtung nimmt die Ausfallüberwachungssteuerung zwangsweise einen Modus ein, der eine Versorgung der Aktoren für eine Notafallleistung sicherstellt. Auch dieser Zustand kann als Rückmeldesignal zur Verfügung stehen.

Erkennt die Ausfallüberwachungssteuerung den Ausfall wenigstens eines der Aktoren, so wird ein entsprechendes Signal, z. B. an die übergeordnete Mastersteuerung, ausgegeben. Gleichzeitig ist es möglich, durch dieses Signal gegebenenfalls ein vorgegebenes Notfallprogramm zu starten und abzufahren. Dieses Programm kann sowohl in der Ausfallüberwachungssteuerung als auch in anderer Ausführung in der Mastersteuerung abgelegt sein. Hierdurch ist sichergestellt, dass durch die Antriebseinrichtung angetriebene Geräte vor Zerstörung geschützt sind.

Nachfolgend wird anhand der Zeichnung eine nach der Erfindung ausgebildete Antriebseinrichtung beschrieben. In der Zeichnung zeigt schematisch
- Fig. 1: ein Blockschaltbild einer Antriebseinrichtung und
- Fig. 2: ein Diagramm betreffend den zeitlichen Verlauf der Aktorversorgungsspannungen.

Die Antriebseinrichtung 1 besteht aus den Aktoren A₁ und A₂ sowie der ersten Steuerung 2 und der dieser übergeordneten Ausfallüberwachungssteuerung 3, an welche die Versorgungsspannung U(_{+,-}) angelegt ist und welche eine Signalstrecke S aufweist, auf der z. B. ein bidirektionaler Datenaustausch zwischen einer nicht dargestellten Mastersteuerung und der Steuerung 2 bzw. 3 der Antriebseinrichtung 1 erfolgt.

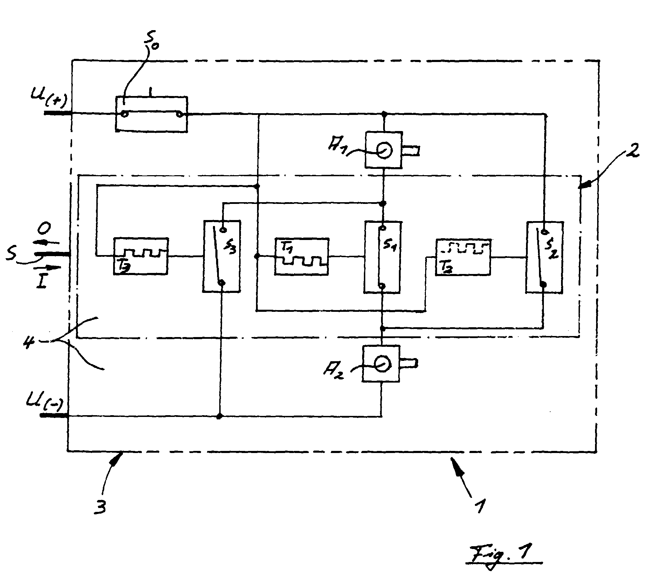

Die Aktoren A₁ und A₂ werden über die Steuerung 2 angesteuert, die hierzu beispielsweise drei Schaltmittel S₁ - S₃ aufweist, denen jeweils ein Taktgeber T₁ - T₃ vorgeschaltet ist. Der Steuerung 2 ist die Ausfallüberwachungssteuerung 3 hierarchisch übergeordnet, die ihrerseits ein Schaltmittel S₀ einschließt und die Überwachung der Aktoren mit übernimmt. Gemäß Fig. 1 sind die Schaltmittel S₀ und S₁ geschlossen, während die Schaltmittel S₂ und S₃ geöffnet sind. Es sei in diesem Beispiel angenommen, dass die Taktgeber nicht aktiviert sind. Somit sind die Aktoren A₁ und A₂ über das geschlossenen Schaltmittel S₁ in Reihe an die Versorgungsspannung U gelegt.

Das bedeutet, dass in dieser Schaltposition die Aktoren mit ihrer Minimalleistung fahren. Wird dann der Taktgeber T₃ aktiviert, so wird hierdurch in entsprechender Taktvorgabe das Schaltmittel S₃ geschlossen bzw. geöffnet. Hieraus folgt, dass die Reihenschaltung für Aktor A₁ in geschlossenem Zustand des Schaltmittels S₃ in der Weise aufgehoben wird, dass der Aktor A₁ über das Schaltmittel S₃ direkt an volle Versorgungsspannung U gelegt wird. In dieser Taktphase erhöht sich selbstverständlich die Leistung des Aktors A₁. Wird das Schaltmittel S₃ geöffnet, so wird die Versorgungsspannung am Aktor A₁ wieder auf den Spannungswert abgesenkt, der bei einer Reihenschaltung der Aktoren A₁ und A₂ gegeben ist. Bei dieser Abschaltung durch das Schaltmittel S₃ entsteht im Aktor A₁ eine kurzzeitige Induktionsspannung, die auf den Wert eines Vielfachen der Versorgungsspannung U ansteigen kann.

Wird z. B. angenommen, dass die Aktoren A₁ und A₂ Elektromotore mit einer umlaufenden Schwungmasse sind, so wird sich bei geschlossenem Schaltmittel S₃ die Drehzahl des Aktors A₁ erhöhen, während sie sich bei geöffnetem Schaltmittel S₃ wieder reduziert. In diesem Zustand, also bei sich reduzierender Drehzahl, wirkt der Aktor A₁ als Generator. Sowohl die Spannungserhöhung durch die Abschaltinduktion als auch die durch die Generatorwirkung des Aktors A₁ zusätzlich aufgebrachte Spannung werden über das Schaltmittel S₁ dem Aktor A₂ zugeführt. Hierdurch wird dem Aktor A₂ eine höhere Leistung zur Verfügung gestellt, als dies durch eine ausschließliche Reihenschaltung der beiden Aktoren möglich wäre. Diese zusätzliche Leistungserhöhung bewirkt, dass auch der Aktor A₂ seine Abgabeleistung kurzzeitig erhöht.

In gleicher Weise lässt sich auch der Aktor A₂ durch den Taktgeber T₂ und das Schaltmittel S₂ takten. Es hat sich als zweckmäßig herausgestellt, wenn die Taktfolge der Taktgeber T₂ und T₃ und somit die Schaltmittel S₂ und S₃ einer Phasenverschiebung unterliegen, die vorzugsweise geringfügig kleiner als 180° ist. In einem solchen Fall nutzt einerseits der Aktor A₂ die Abschaltinduktion und Generatorfunktion des Aktors A₁ und andererseits, um annähernd 180° phasenverschoben, der Aktor A₁ die Abschaltinduktion und Generatorfunktion des Aktors A₂. Es versteht sich für einen Fachmann, dass hierbei die Taktfolge des Schaltmittels S₁ den Taktfolgen der Schaltmittel S₂ und S₃ angepasst sein muss.

Dadurch, dass der jeweils getaktete Aktor von seiner Minimalleistung her auf eine höhere Leistungsabgabe hin angesteuert wird, ergibt sich ein "weiches" Hochfahren. Ein eventuelles Lagerspiel von z. B. angetriebenen Geräten verursacht hierdurch weniger Lagergeräusche. In invertierter Schaltfolge gilt dieses auch für das Herunterfahren der Leistung von einer höheren auf eine niedrigere Leistung.

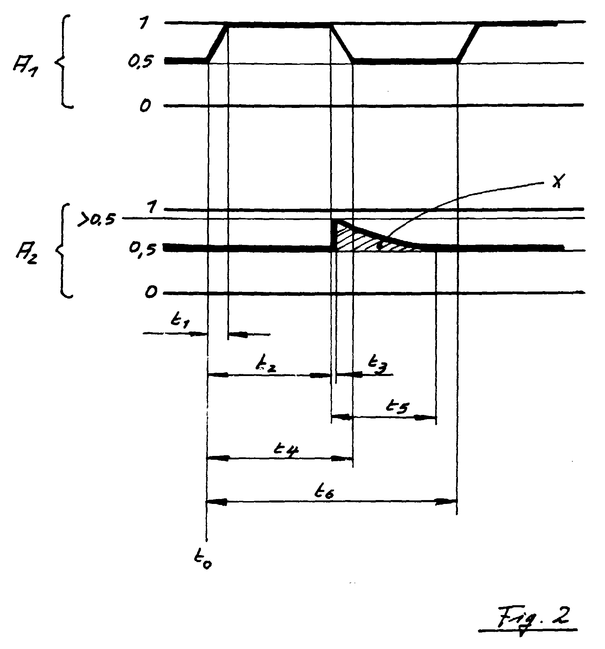

Anhand des Diagrammes nach Fig. 2 werden die jeweiligen Abläufe und Funktionen deutlich.

Voraussetzungen sind:
a) A₁ und A₂ sind in Reihe an die Versorgungsspannung U geschaltet;
   (A₁ und A₂ laufen auf Minimalleistung)
b) A₁ wird durch Pulsbreitenmodulation getaktet auf volle Spannung geschaltet
   (je 50 % Ein-Ausschaltzeit)
c) A₂ nutzt die Überspannung der Abschaltinduktion von A₁ zur Leistungssteigerung (50% + x)

- t₀: =Beginn der getakteten Ein-Ausschaltphase
- t₁: =Zeit der Spannungsanstiegsflanke für A₁
- t₂: =Laufzeit der getakteten Einschaltphase für A₁
- t₃: =Zeit der Spannungsanstiegsflanke der Abschaltinduktionsspitze von A₁, die von A₂ zur Leistungssteigerung x genutzt wird
- t₄: =Gesamtlaufzeit der getakteten Einschaltphase für A₁
- t₄-t₂: =Zeit der Spannungsabfallflanke für A₁
- t₅: = Nutzungszeit der Abschaltinduktion und der Generatorfunktion von A₁ durch A₂
- t₆: =Taktperiode

Durch die kurze Zeit t₃ der Spannungsanstiegsflanke wird die Verlustleistung der Antriebseinrichtung ebenso wie durch die Generatorfunktion des Aktors A₁ entsprechend reduziert.

In einer weiteren Schaltvariante der Steuerung wird angenommen, dass die Schaltmittel S₀, S₂ und S₃ geschlossen sind, während das Schaltmittel S₁ geöffnet ist und die Taktgeber T₁ - T₃ nicht aktiviert sind. Unter diesen Voraussetzungen sind beide Aktoren A₁ und A₂ an volle Versorgungsspannung U geschaltet und geben ihre Höchstleistung ab.

Die Schaltmittel S₁ bis S₃ können sowohl kontaktbehaftete Relais bzw. Schütze sein oder auch kontaktlose Schalter, wie z.B. vom Transistor- bzw. Thyristortyp.

Die Vorteile der erfindungsgemäßen Antriebseinrichtung liegen insbesondere darin, dass eine stufenlose Einstellung zwischen der Minimal- und der Höchstleistung durch die Pulsbreitenmodulation der Versorgungsspannung jedes einzelnen Aktors bzw. der Aktoren beliebig und effektiv erreichbar ist. Die Nutzung der Abschaltinduktion und des Generatoreffektes trägt zu wesentlich kleinerer Verlustleistung bei. Als Aktoren kommen außer elektrischen Motoren auch sonstige elektrische Verbraucher in Betracht, wie beispielsweise Heizelemente, Lampen, piezoelektrische Elemente und Ventilantriebe.

## Patentansprüche

1. Elektrisch ansteuerbare Antriebseinrichtung (1) mit mindestens einem ersten und mindestens einem zweiten elektrisch betreibbaren Aktor (A₁, A₂), bei der die Aktoren durch eine erste Steuerung (2) und durch Schaltmittel (S₁ - S₃) wahlweise in Reihe oder parallel an die Pole (+,-) einer Versorgungsspannung (U) anlegbar sind, wobei die Aktoren beim Einschalten der Versorgungsspannung (U) als Ausgangsposition zur Abgabe einer Minimalleistung durch die Steuerung (2) in Reihe an die Versorgungsspannung (U) geschaltet sind und zur Abgabe einer Höchstleistung durch die Steuerung (2) parallel an die Versorgungsspannung (U) geschaltet sind, dadurch gekennzeichnet, dass zur variablen Vorgabe von Leistungen zwischen der Minimal- und Maximalleistung des ersten Aktors die Versorgungsspannung (U) dem ersten Aktor pulsbreitenmoduliert in zeitlich definierter Einschalt-Ausschalt-Taktfolge zuführbar ist.

2. Einrichtung nach Anspruch 1, dadurch gekennzeichnet, dass die Spannung der Abschaltinduktion des ersten Aktors (A₁) wenigstens einem zweiten Aktor (A₂) durch die Steuerung (2) aufgeschaltet ist und die Spannung für den zweiten Aktor (A₂) durch diese Spannungsaufschaltung anhebt.

3. Einrichtung nach Ansprüchen 1 und 2, dadurch gekennzeichnet, dass die erste Steuerung (2) die Versorgungsspannung (U) des ersten und/oder des zweiten Aktors (A₁, A₂) mittels Taktgebern (T₃, T₁) taktet.

4. Einrichtung nach einem der Ansprüche 1 bis 3, dadurch gekennzeichnet, dass die Steuerung (2) die Versorgungsspannung (U) des ersten und des zweiten Aktors (A₁, A₂) phasenverschoben derart taktet, dass die Abschaltinduktion des ersten Aktors (A₁) in der beginnenden Einschaltphase des zweiten Aktors (A₂) die Spannung für den zweiten Aktor anhebt und die Abschaltinduktion des zweiten Aktors (A₂) in der beginnenden Einschaltphase des ersten Aktors (A₁) die Spannung für den ersten Aktor anhebt.

5. Einrichtung nach einem der Ansprüche 1 bis 4, dadurch gekennzeichnet, dass der ersten Steuerung (2) eine zweite Steuerung als Ausfallüberwachungssteuerung (3) zugeordnet ist, dass die Ausfallüberwachungssteuerung (3) der ersten Steuerung (2) hierarchisch übergeordnet ist und dass die Ausfallüberwachungssteuerung (3) auf erkannte Ausfälle der ersten Steuerung (2) und/oder wenigstens eines der Aktoren (A₁, A₂) mit wenigstens einem diesbezüglichen Signal reagiert.

6. Einrichtung nach Anspruch 5, dadurch gekennzeichnet, dass erkannte Fehler einer ersten Kategorie durch einen der Ausfallüberwachungssteuerung (3) vorgegebenen bzw. implementierten Algorithmus selbsttätig und wenigstens zum Teil korrigiert werden und dass erfolgte Maßnahmen zur Fehlerkorrektur der ersten Fehlerkategorie und die diesbezüglich erfolgreiche oder erfolglose Korrektur als Signal rückgemeldet wird.

7. Einrichtung nach einem der Ansprüche 5 und 6, dadurch gekennzeichnet, dass die Ausfallüberwachungssteuerung (3) bei Totalausfall wenigstens eines Teiles der Steuereinrichtung (4) in einen zwangsweisen Modus zur erforderlichen Abgabe einer Normalleistung durch wenigstens einen Aktor (A) übergeht.

8. Einrichtung nach einem der Ansprüche 1 bis 7, dadurch gekennzeichnet, dass die Ausfallüberwachungssteuerung (3) die Plausibilität von eingehenden Signalen und von Rückmeldesignalen überwacht und dass die Ausfallüberwachungssteuerung weiterhin eine Selbstüberwachung, eine Überwachung der ersten Steuerung (2) und der erfolgten Funktionen der Aktoren (A₁, A₂) vornimmt sowie bei Fehlererkennung ein Signal innerhalb der Steuereinrichtung (4) als Rückmeldesignal generiert.

9. Einrichtung nach einem der Ansprüche 5 bis 8, dadurch gekennzeichnet, dass die erste Steuerung (2) und die Ausfallüberwachungssteuerung (3) als eine gemeinsame Steuereinrichtung (4) miteinander korrespondieren, dass die Einrichtung mehr als zwei Aktoren (A) aufweist und dass die Aktoren von einer gemeinsamen Steuereinrichtung (4) angesteuert und überwacht werden.

10. Einrichtung nach einem der Ansprüche 1 bis 9, dadurch gekennzeichnet, dass ihre Energieversorgung wahlweise aus einer Signalstrecke (S), einem Bussystem oder durch separate Einspeisung einer Gleichspannung (U+, U-) erfolgt.
